# EUROPÄISCHE PATENTSCHRIFT

(11) **EP 3 155 676 B1**
(45) Veröffentlichungstag und Bekanntmachung des Hinweises auf die Patenterteilung: **07.07.2021**
(21) Anmeldenummer: 15724514.3
(22) Anmeldetag: 19.05.2015
(51) Int. Cl.: H01M 4/04, H01M 4/134, H01M 4/136, H01M 4/1395, H01M 4/1397, H01M 4/38, H01M 4/58, H01M 4/62, H01M 10/0525, H01M 4/02

(54) **ELEKTRODENMATERIAL FÜR EINEN ELEKTROCHEMISCHEN SPEICHER, VERFAHREN ZUR HERSTELLUNG EINES ELEKTRODENMATERIALS SOWIE ELEKTROCHEMISCHER ENERGIESPEICHER**
ELECTRODE MATERIAL FOR AN ELECTROCHEMICAL ACCUMULATOR, METHOD FOR PRODUCING AN ELECTRODE MATERIAL, AND ELECTROCHEMICAL ENERGY ACCUMULATOR
MATÉRIAU D'ÉLECTRODE POUR ACCUMULATEUR ÉLECTROCHIMIQUE, PROCÉDÉ DE PRODUCTION D'UN MATÉRIAU D'ÉLECTRODE, ET ACCUMULATEUR D'ÉNERGIE ÉLECTROCHIMIQUE

(30) Priorität: 12.06.2014 DE 102014009554
(43) Veröffentlichungstag der Anmeldung: 19.04.2017
(73) Patentinhaber: Daimler AG, 70372 Stuttgart (DE)
(72) Erfinder: HINTENNACH, Andreas, 71732 Tamm (DE)
(74) Vertreter: JENSEN & SON
(86) Internationale Anmeldenummer: PCT/EP2015/001021
(87) Internationale Veröffentlichungsnummer: WO 2015/188915

(56) Entgegenhaltungen:
- WO-A1-2012/100301
- WO-A1-2012/100301
- WO-A1-2013/078645
- WO-A1-2013/078645
- DE-A1-102008 063 552
- DE-A1-102010 027 950
- DE-A1-102012 209 313
- US-A1- 2011 175 024
- US-A1- 2011 175 024
- AURELIUS VANDENBERG ET AL: "A novel design approach for lithium-sulphur batteries", RUSSIAN JOURNAL OF ELECTROCHEMISTRY, Bd. 50, Nr. 4, 3. Juli 2013 (2013-07-03), Seiten 317-326, XP055207926, ISSN: 1023-1935, DOI: 10.1134/S102319351306013X
- LI S ET AL: "Layer structured sulfur/expanded graphite composite as cathode for lithium battery", ELECTROCHEMICAL AND SOLID-STATE LETTERS, IEEE SERVICE CENTER, PISCATAWAY, NJ, US, Bd. 14, Nr. 7, 22. April 2011 (2011-04-22) , Seiten A105-A107, XP002690362, ISSN: 1099-0062, DOI: DOI:10.1149/1.3582793
- AURELIUS VANDENBERG ET AL: "A novel design approach for lithium-sulphur batteries", RUSSIAN JOURNAL OF ELECTROCHEMISTRY, vol. 50, no. 4, 3 July 2013 (2013-07-03), pages 317-326, XP055207926, ISSN: 1023-1935, DOI: 10.1134/S102319351306013X

## Beschreibung

Die Erfindung betrifft ein Elektrodenmaterial für einen elektrochemischen Speicher gemäß dem Oberbegriff des Anspruchs 1. Weiterhin betrifft die Erfindung ein Verfahren zur Herstellung eines Elektrodenmaterials sowie einen elektrochemischen Energiespeicher.

In der US 2013/0164635 A1 ist ein festes Verbundmaterial beschrieben, welches für eine Kathode einer Lithium-Schwefel-Batteriezelle verwendet wird, wobei das Verbundmaterial 1 bis 75 Gew.% gestrecktes Graphit, 25 bis 29 Gew.% Schwefel, Null bis 50 Gew.% eines weiteren leitfähigen Stoffs oder mehrerer weiterer leitfähiger Stoffe und Null bis 50 Gew.% eines Bindemittels oder mehrerer Bindemittel umfasst. Die Lithium-Schwefel-Batteriezelle umfasst weiterhin eine Anode und einen Elektrolyten, welcher zwischen der Anode und der Kathode angeordnet ist.

Aurelius Vandenberg ET AL: "A novel design approach for lithium-sulphur batteries", Russian Journal of Electrochemistry, Bd. 50, Nr. 4, 3. Juli 2013 (2013-07-03), Seiten 317-326, XP055207926, ISSN: 1023-1935, DOI: 10.1134/S102319351306013X offenbart ein Verfahren zur Herstellung einer Kohlenstoffmatrix zur Aufnahme von Schwefel sowie ein Verfahren zur Herstellung von Silizium-Nanostrukturen.

US 2011/0175024 A1 offenbart ein Verfahren zur Herstellung von Siliziumkarbid.

WO 2013/078645 A1 und DE 102012209313 offenbaren ein mittelporöses Silizium/Kohlenstoff-Komposit zur Verwendung als Anodenmaterial für eine Lithium-Ionen-Batterie.

Der Erfindung liegt die Aufgabe zu Grunde, ein gegenüber dem Stand der Technik verbessertes Elektrodenmaterial für einen elektrochemischen Energiespeicher, ein verbessertes Verfahren zur Herstellung eines Elektrodenmaterials und einen verbesserten elektrochemischen Energiespeicher anzugeben.

Hinsichtlich des Elektrodenmaterials wird die Aufgabe erfindungsgemäß mit den in Anspruch 4 angegebenen Merkmalen, hinsichtlich des Verfahrens mit den in Anspruch 1 angegebenen Merkmalen und hinsichtlich des elektrochemischen Energiespeichers mit den in Anspruch 6 angegebenen Merkmalen gelöst.

Vorteilhafte Ausgestaltungen der Erfindung sind Gegenstand der Unteransprüche.

Ein Elektrodenmaterial für einen elektrochemischen Energiespeicher ist aus einem Verbundmaterial gebildet, wobei das Verbundmaterial zumindest eine elektrisch leitfähige Matrix und ein Lithium oder eine Lithiumlegierung oder Natrium als Aktivmaterial umfasst. Erfindungsgemäß ist vorgesehen, dass die elektrisch leitfähige Matrix zumindest eine poröse und mechanisch flexible Kohlenstoffstruktur umfasst.

Das derart ausgebildete Elektrodenmaterial eignet sich insbesondere für Lithium-Ionen- oder Metall-Schwefel- oder Metall-Luft-Batterien, wobei mittels der porösen und mechanisch flexiblen Kohlenstoffverbindung eine lade- und entladebedingte Volumenänderung durch Ein- oder Auslagerung des Aktivmaterials der Elektrode, insbesondere der Anode, möglichst beschädigungsfrei und ohne Verlust der elektrischen Kontaktierung der Elektroden aufgenommen werden kann. Zudem ist damit insbesondere ein in der Kathode eingelagertes Aktivmaterial irreversibel adsorbierbar, so dass eine Diffusion des kathodischen Aktivmaterials zur Anode verhindert oder zumindest verringert werden kann und damit eine Lebensdauer der Batterie gegenüber dem Stand der Technik signifikant verbessert ist.

Vorzugsweise ist durch die mechanisch flexible Ausbildung der elektrisch leitfähigen Matrix, insbesondere der Kohlenstoffstruktur, ein Volumen der elektrisch leitfähigen Matrix in Abhängigkeit eines Oxidationsvorgangs und/oder Reduktionsvorgangs des Aktivmaterials veränderbar. D. h. beispielsweise: während eines Entladevorgangs der Batterie wird das in einer Anode interkalierte Aktivmaterial, z. B. Lithium in Lithium-Ionen und Elektronen, oxidiert. Die Lithium-Ionen wandern anschließend durch einen ionenleitenden Separator zur Kathode. An der Kathode werden die Lithium-Ionen durch eine Reduktionsreaktion aufgenommen, wobei das Aktivmaterial der Kathode, z. B. Schwefel zu Lithiumsulfid, reduziert wird. Dabei ist in der elektrisch leitfähigen Matrix der Anode weniger Aktivmaterial eingebettet als in der Kathode, so dass die elektrisch leitfähige Matrix der Anode ein geringeres Volumen aufweist als beim Laden der Batterie, wobei das Aktivmaterial, z. B. Lithium-Kationen, zurück zur Anode wandert. Dabei vergrößert sich das Volumen der elektrisch leitfähigen Matrix der Anode wieder. Analog gilt das Gleiche für die Kathode. Dies ist auch als "Atmen" der Elektrode bekannt. Diese mechanische Flexibilität ermöglicht es, die genannten volumetrischen Änderungen der Elektrode zu kompensieren, so dass eine mechanische Belastung der Elektrode gegenüber dem Stand der Technik verringert ist. Eine Porengröße der Kohlenstoffstruktur kann dabei von einem Mikrobereich über einen Mesobereich bis zu einem Makrobereich variieren.

Erfindungsgemäß ist das Verbundmaterial als ein Beschichtungsmaterial für eine Anode ausgebildet, wobei die elektrisch leitfähige Matrix zusätzlich eine Siliziumstruktur umfasst. Silizium weist gegenüber Graphit eine verringerte elektrische Leitfähigkeit auf, besitzt aber die Eigenschaft, eine höhere Menge an Aktivmaterial, insbesondere MetallIonen wie z. B. Lithium-Ionen, zu interkalieren und eignet sich somit besonders gut zur Beschichtung der Anode.

Das Verbundmaterial kann weiterhin als ein Beschichtungsmaterial für eine Kathode ausgebildet sein, wobei die elektrisch leitfähige Matrix beispielsweise aus Graphit gebildet ist, welches eine gute elektrische Leitfähigkeit sowie eine hohe Korrosionsbeständigkeit aufweist.

Zur Herstellung des zuvor beschriebenen Elektrodenmaterials wird erfindungsgemäß ein Verfahren verwendet, welches folgende Schritte umfasst:
a) Bereitstellen einer Anzahl von Grundstoffen sowie zusätzlich Silizium zur Herstellung der elektrisch leitfähigen Matrix,
b) Vermischen und Pressen der Grundstoffe zu einer Tablette,
c) Eintauchen der Tablette in ein Lösungsmittel,
d) Bestrahlen der Tablette mit elektromagnetischer Hochfrequenzstrahlung,
e) Pulverisieren der bestrahlten Tablette und anschließend Eintauchen des Pulvers in ein weiteres Lösungsmittel,
f) Erzeugung eines Gemischs aus dem in das weitere Lösungsmittel eingetauchte Pulver und Lithium oder Natrium als Aktivmaterial,
g) Erhitzen des Gemischs auf eine vorgegebene Temperatur und anschließendes Verrühren des erhitzten Gemischs
h) Abkühlen des verrührten, erhitzten Gemischs,
i) Bestrahlen des abgekühlten Gemischs mit elektromagnetischer Hochfrequenzstrahlung und,
j) Abkühlen und Pulverisieren des bestrahlten Gemischs,

Das Verfahren ermöglicht die Herstellung eines porösen und mechanisch flexiblen Elektrodenmaterials, welches lösemittelfrei als Beschichtung auf eine Elektrode aufgebracht werden kann. Es sind somit keine Trocknungsprozesse des Elektrodenmaterials notwendig, wodurch Energie eingespart werden kann. Zudem ist durch den ausfallenden Trocknungsprozess eine Abluftreinigung nicht erforderlich, so dass ein Energieverbrauch weiter optimiert wird. Auch eine Lösemittelaufreinigung entfällt, so dass ein Zeit- und Kostenaufwand des Herstellungsprozesses gegenüber der Verwendung eines Lösemittels verringert wird. Ein Gesamtbetrag an Kohlenstoffdioxid-Emissionen ist damit gegenüber der Verwendung eines Lösemittels ebenfalls verringert.

Besonders bevorzugt wird die bei der Herstellung des Elektrodenmaterials gemäß dem Verfahrensschritt d) und i) eingesetzte elektromagnetische Hochfrequenzstrahlung im Wesentlichen kontinuierlich ausgesendet. Dies ist mittels eines modifizierten Mikrowellenofens möglich, welcher gegenüber allgemein bekannten Mikrowellenherden einen zweiten Hochspannungstransformator sowie zusätzlich zwei Hochspannungskondensatoren und vier Hochspannungsdioden umfasst. Die kontinuierlich ausgesendete Strahlung bewirkt eine Pyrolyse oder Teilpyrolyse organischer Verbindungen in der elektrisch leitfähigen Matrix, wodurch eine Porosität und eine mechanische Flexibilität der elektrisch leitfähigen Matrix erreicht werden.

Das Silizium wird dabei der elektrisch leitfähigen Matrix zusätzlich zu den Grundstoffen hinzugefügt, wobei gemäß einem bevorzugten Ausführungsbeispiel als Grundstoffe zumindest ein Kohlenhydrat, Kaliumhydrogencarbonat und Magnesiumstearat bereitgestellt werden.

Darüber hinaus betrifft die Erfindung einen elektrochemischen Energiespeicher mit zumindest einer Elektrode, umfassend ein zuvor beschriebenes Elektrodenmaterial.

Ausführungsbeispiele der Erfindung werden im Folgenden anhand von Zeichnungen näher erläutert.

Dabei zeigen:
- Fig. 1: schematisch eine Explosionsdarstellung einer Einzelzelle für eine Batterie,
- Figur 2: ein Verfahrensablaufdiagramm für ein Verfahren zur Herstellung eines Elektrodenmaterials für eine Kathode und
- Figur 3: schematisch eine elektrische Schaltung einer Leistungselektronik eines Mikrowellenofens zur Bestrahlung eines Elektrodenmaterials während der Herstellung des Elektrodenmaterials.

Einander entsprechende Teile sind in allen Figuren mit den gleichen Bezugszeichen versehen.

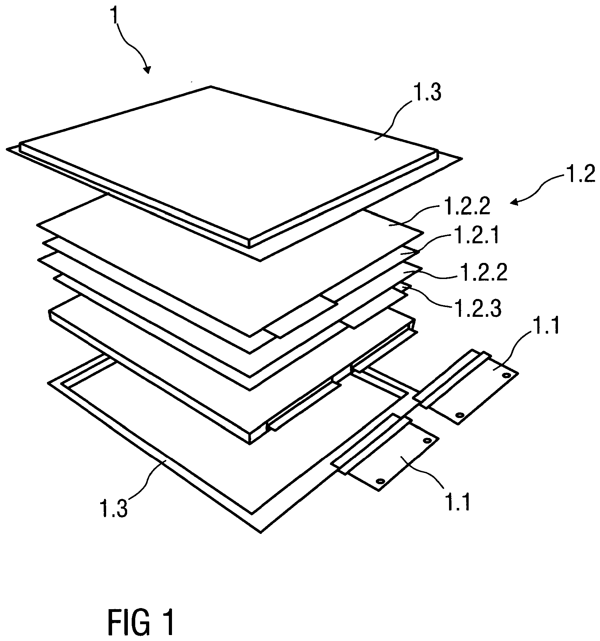

In Figur 1 ist eine Einzelzelle 1 für eine nicht näher dargestellte Batterie gezeigt. Bei der Batterie handelt es sich insbesondere um eine aufladbare Batterie, z. B. eine Lithium-Schwefel-Batterie.

Bei der Einzelzelle 1 handelt es sich um eine sogenannten Pouch- oder Coffee-Bag-Zelle, wobei zur Bildung der Batterie eine Anzahl solcher Einzelzellen 1 elektrisch seriell und/oder parallel miteinander verschaltet ist und wobei die Verschaltung über blechförmige Ableiter 1.1 als elektrische Anschlüsse der Einzelzelle 1 erfolgt.

Eine solche Einzelzelle 1 ist als ein flaches, weitestgehend rechteckförmiges Speicherelement für Elektroenergie ausgeführt, welches eine Elektrodenfolienanordnung 1.2 aus Lagen mehrerer abwechselnd gestapelter, folienartiger Anoden 1.2.1, Separatoren 1.2.2 und Kathoden 1.2.3 umfasst, die von einer aus zwei schalenartig geformten Folienabschnitten gebildeten folienartigen Hülle 1.3 umgeben ist.

Die Anode 1.2.1 ist hierbei als eine negative Elektrode und die Kathode 1.2.3 als eine positive Elektrode ausgebildet. Die Anode 1.2.1 und die Kathode 1.2.3 werden im Folgenden auch als Elektroden zusammengefasst bezeichnet.

Die Elektroden der Einzelzelle 1 sind jeweils aus einem Substrat gebildet und mit der elektrisch leitfähigen Matrix, in die ein Aktivmaterial in definierter Art und Weise eingebunden ist, beschichtet. Die Elektroden sind hierbei als Festkörper ausgebildet, wobei die Batterie vorzugsweise auch für hohe Temperaturbereiche und damit als Hochtemperatur-Batterie eingesetzt werden kann.

Die elektrisch leitfähige Matrix für die Kathode 1.2.3 ist aus einer elektrisch leitfähigen Kohlenstoffstruktur, wie z. B. Graphit oder Ruß, gebildet. Die elektrisch leitfähige Matrix für die Anode 1.2.1 ist aus einer elektrisch leitfähigen Kohlenstoffstruktur und einer Siliziumstruktur gebildet, da Silizium zwar eine weniger gute elektrische Leitfähigkeit aufweist als Kohlenstoff, dafür aber eine größere Menge von Aktivmaterial einbinden kann.

Das Aktivmaterial kann homogen über die gesamte Elektrode in die elektrisch leitfähige Matrix eingebunden werden. Das Aktivmaterial dient einer zwischen der Anode 1.2.1 und der Kathode 1.2.3 ablaufenden chemischen Reaktion, insbesondere bei einem Ladevorgang und Entladevorgang der Batterie. Ist die Batterie als eine Lithium-Schwefel-Batterie ausgebildet, so ist das Aktivmaterial für die Kathode 1.2.3 z. B. Schwefel und für die Anode 1.2.1 Lithium oder eine Lithiumlegierung.

Beim Entladen der Batterie wird das in der in der Anode 1.2.1 interkalierte Lithium in Lithium-Ionen und Elektronen oxidiert. Die Lithium-Ionen wandern durch den ionenleitenden Separator 1.2.2 zur Kathode 1.2.3, während gleichzeitig die Elektronen über einen äußeren Stromkreis von der Anode 1.2.1 zur Kathode 1.2.3 übertragen werden, wobei zwischen der Kathode 1.2.3 und der Anode 1.2.1 ein Energieverbraucher zwischengeschaltet sein kann, welcher durch den Elektronenstrom mit Energie versorgt wird. An der Kathode 1.2.3 werden die Lithium-lonen durch eine Reduktionsreaktion aufgenommen, wobei der Schwefel zu Lithiumsulfid reduziert wird.

Die elektrochemische Reaktion beim Entladen einer Batterie ist allgemein bekannt und kann am Beispiel einer Lithium-Schwefel-Batterie wie folgt beschrieben werden:
Anode 1.2.1: Li → Li⁺ + e⁻;
Kathode 1.2.3: S₈ + 2Li⁺ + e⁻ → Li₂S₈ → Li₂S₆ → Li₂S₄ → Li₂S₂ → Li₂S

Beim Laden der Batterie wird an die Elektroden eine Energiequelle angeschlossen. Dabei wird das Lithium aus dem Lithiumsulfid zu Lithium-Kationen und Elektronen oxidiert, wobei die Lithium-Kationen über den Separator 1.2.2 und die Elektronen über den äußeren Stromkreis zurück zur Anode 1.2.1 wandern.

Beim Entladen der Batterie entstehen zusätzlich Polysulfide, welche beim Ladevorgang möglicherweise nicht vollständig zu elementaren Schwefel umgewandelt werden. Diese Polysulfide können über den Separator 1.2.2 zur Anode 1.2.1 wandern und dort eine Lithiumsulfid-Schicht bilden, die eine Kapazität und damit eine Lebensdauer der Batterie erheblich verringern. Zudem wird das in der elektrisch leitfähigen Matrix der Kathode 1.2.3 eingebettete Aktivmaterial sukzessive abgebaut.

Zudem ist es bekannt, dass die Elektroden beim Laden und Entladen ihre Volumina ändern. Dies führt zu mechanischen Beanspruchungen der Elektroden, was zu einem Leistungsverlust der Batterie führen kann. Zudem kann ein Verlust einer elektrischen Kontaktierung der Elektrode erfolgen.

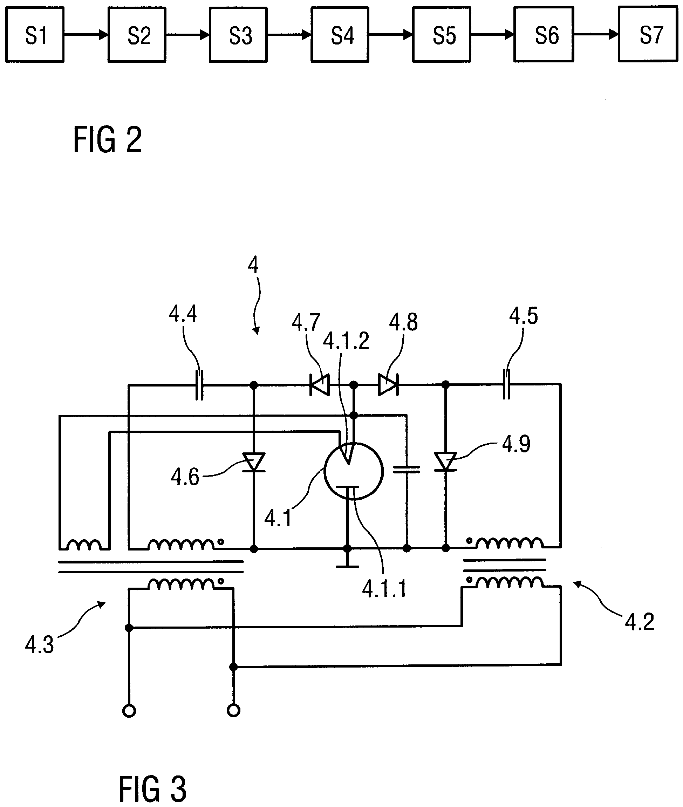

Zur Lösung des Problems sieht die Erfindung vor, die elektrisch leitfähige Matrix als eine poröse und mechanisch flexible Kohlenstoffverbindung auszubilden, wobei ein Verfahren zur Herstellung eines Elektrodenmaterials für eine Kathode 1.2.3 mit einer solch porös und mechanisch flexibel ausgebildeten Kohlenstoffstruktur in Figur 2 näher beschrieben wird.

Das Aktivmaterial ist in die Poren der elektrisch leitfähigen Matrix inkaliert, wobei die Poren hier nicht näher dargestellt sind. Im geladenen Zustand der Einzelzelle 1 ist hierbei eine volumetrische Ausdehnung der elektrisch leitfähigen Matrix gegenüber dem Stand der Technik möglich.

Im entladenen Zustand ist das Aktivmaterial der Kathode zu Lithiumsulfid reduziert und füllt den volumetrisch vergrößerten Freiraum in der Kohlenstoffstruktur fast vollständig aus. Die elektrisch leitfähige Matrix dehnt sich dabei korrespondierend mit der vergrößerten Menge an Aktivmaterial, in diesem Fall Lithiumsulfid, aus. Da in der Anode im entladenen Zustand weniger Aktivmaterial, in diesem Fall Lithium-Ionen, vorhanden ist, passt sich die elektrisch leitfähige Matrix in Bezug auf ihre Ausdehnung korrespondierend mit der Menge an Lithium-Ionen an.

Dadurch, dass sich das Volumen der elektrisch leitfähigen Matrix in Abhängigkeit einer Menge an in der Kohlenstoffstruktur eingebetteten Aktivmaterial und damit auch eine jeweilige Porengröße der Kohlenstoffstruktur ändert, ist das Risiko, dass Polysulfide beim Ladevorgang aus der elektrisch leitfähigen Matrix der Kathode austreten, gegenüber dem Stand der Technik signifikant verringert.

Im Folgenden wird ein Verfahren zur Herstellung eines solchen Elektrodenmaterials für eine Kathode beschrieben, das jedoch nicht Gegenstand der Ansprüche ist.

Dazu zeigt Figur 2 ein Verfahrensablaufdiagramm mit sieben Verfahrensschritten S1 bis S7.

In einem ersten Verfahrensschritt S1 werden zur Herstellung der Kohlenstoffstruktur für die elektrisch leitfähige Matrix einer Kathode 1.2.3 Kohlenhydrate, z. B. Saccharose, Kaliumhydrogencarbonat, Magnesiumstearat und Stearinsäure, bereitgestellt und miteinander vermischt. Anschließend werden die oben genannten Komponenten pulverisiert und zu einer Tablette gepresst, wobei die Abmessungen der Tablette aufgrund des Verhältnisses von Oberfläche und Volumen vorgegeben sind.

In einem zweiten Verfahrensschritt S2 wird die Tablette in ein Lösungsmittel, z. B. ein Gemisch aus Ethanol und Acetylaceton, getaucht, wobei das Lösungsmittel vorzugsweise nur oberflächlich in die Tablette eindringt.

In einem dritten Verfahrensschritt S3 wird die in Lösungsmittel getauchte Tablette kontinuierlich mit elektromagnetischer Strahlung im Gigahertz-Bereich in fünf Stufen nach einem vorgegebenen Protokoll, d. h. bestimmte Bestrahlungszeiten für entsprechende Leistungsregulierungen, bestrahlt. Dies erfolgt mit Hilfe eines Mikrowellenofens 4, dessen Leistungselektronik in Form eines Schaltbilds in Figur 3 näher dargestellt ist.

Während der Bestrahlung erfolgt eine Teilpyrolyse der Tablette, wobei die Kohlenstoffverbindungen der Kohlenstoffstruktur teilweise thermo-chemisch gespalten werden. Dabei werden hochporöse Kohlenstoffverbindungen kontrolliert gebildet.

In einem vierten Verfahrensschritt S4 wird die teilpyrolisierte Kohlenstoffverbindung erneut pulverisiert, in ein Lösungsmittel getaucht und mit einem Aktivmaterial, z. B. Schwefelpulver, vermischt.

In einem fünften Verfahrensschritt S5 wird die mit dem Aktivmaterial vermischte Kohlenstoffverbindung in einem geschlossenen Gefäß auf eine vorbestimmte Temperatur erhitzt, wobei das Aktivmaterial von einem festen in einen flüssigen Aggregatzustand wechselt, d. h. das Aktivmaterial schmilzt. Die Temperatur wird für eine vorgegebene Zeitdauer konstant gehalten. Die Erhitzung der mit dem Aktivmaterial vermischten Kohlenstoffstruktur kann mittels des Mikrowellenofens 4 erfolgen.

In einem sechsten Verfahrensschritt S6 werden das geschmolzene Aktivmaterial und die Kohlenstoffstruktur mit kontinuierlich ausgesendeten Ultraschallwellen miteinander verrührt bis sich die Temperatur des Gemischs auf eine bestimmte Temperatur abgekühlt hat.

In einem siebten Verfahrensschritt S7 wird das abgekühlte Gemisch erneut mittels des Mikrowellenofens 4 mit elektromagnetischer Strahlung in zwei Stufen nach einem vorgegebenen Heizprotokoll, z. B mit einer Strahlungsleistung zwischen 250 Watt und 1000 Watt, bestrahlt, wodurch eine dauerhafte, sichere und insbesondere im Wesentlichen irreversible Adsorption des Aktivmaterials in der Kohlenstoffstruktur sichergestellt ist. Abschließend wird das vermischte und bestrahlte Gemisch auf eine vorbestimmte Temperatur abgekühlt und pulverisiert.

Die Herstellung des erfindungsgemäßen Elektrodenmaterials für eine Anode 1.2.1 erfolgt ähnlich dem oben beschriebenen Verfahren. Dabei wird der Kohlenstoffstruktur zusätzlich Silizium hinzugefügt, so dass die elektrisch leitfähige Matrix eine poröse und mechanisch flexible Kohlenstoffstruktur und Siliziumstruktur umfasst. Als Aktivmaterial wird in die elektrisch leitfähige Matrix Lithium inkaliert. Die Inkalation von Lithium erfolgt dabei analog der oben beschriebenen Inkalation von Schwefel in die elektrisch leitfähige Matrix gemäß des vierten bis siebten Verfahrensschritts S4 bis S7. Alternativ kann als Aktivmaterial für die Anode 1.2.1 Natrium verwendet werden.

Figur 3 zeigt eine elektrische Schaltung des Mikrowellenofens 4 in Form eines Schaltbilds, wobei das Schaltbild nur einen Teil der elektrischen Schaltung des Mikrowellenofens 4 zeigt, insbesondere eine Leistungselektronik.

Der Mikrowellenofen 4 umfasst ein Magnetron 4.1 mit einer positiv geladenen Elektrode 4.1.1 und einer negativ geladenen Elektrode 4.1.2.

Die positiv geladene Elektrode 4.1.1 ist mit einem Massepotential verbunden, so dass die negativ geladene Elektrode 4.1.2 eine gegenüber dem Massepotential negative Spannung aufweist.

Zum Betrieb des Magnetrons 4.1, welches elektromagnetische Hochfrequenzwellen erzeugt, ist das Magnetron 4.1 mit zwei Hochspannungstransformatoren 4.2, 4.3 gekoppelt, die jeweils eine an einer ersten Spule angelegte Wechselspannung, insbesondere Netzspannung, in einer zweiten Spule auf einen vorgegebenen Pegel, insbesondere auf einen Pegel im Hochvoltbereich, erhöhen.

Die derart erzeugten Wechselhochspannungen werden jeweils mittels eines Hochspannungskondensators 4.4, 4.5 und einer Brückengleichrichterschaltung, umfassend jeweils zwei parallel zueinander geschaltete Hochspannungsdioden 4.6 bis 4.9, geteilt, gleichgerichtet und an die negativ geladene Elektrode 4.1.2 des Magnetrons 4.1 angelegt.

Die an der negativ geladenen Elektrode 4.1.2 angelegten, gleichgerichteten Hochspannungen wechseln dabei jeweils mit einer vorgegebenen Frequenz periodisch zwischen Null Volt und einer vorgegebenen Hochspannung zum Betrieb des Magnetrons 4.1. Dabei ist dem Magnetron 4.1 eine bestimmte Schwellspannung zugeordnet. Ist die an das Magnetron 4.1 angelegte Hochspannung größer als die Schwellspannung, so fließt kurzzeitig ein Strom durch das Magnetron 4.1.

Der hier beschriebene Mikrowellenofen 4 zeichnet sich insbesondere durch einen zweiten Hochspannungstransformator 4.3, der zwei Hochspannungskondensatoren 4.4, 4.5 und der Brückengleichrichterschaltung aus, mittels derer eine kontinuierlich ausgesendete Hochfrequenzstrahlung möglich ist. Dazu übersteigen die an dem Magnetron 4.1 angelegten Hochspannungen abwechselnd die Schwellspannung, so dass kontinuierlich ein Strom durch das Magnetron 4.1 fließt.

Die kontinuierliche Bestrahlung des Elektrodenmaterials bewirkt dabei eine erwünschte Teilpyrolyse der Kohlenstoffstruktur und insbesondere der Siliziumstruktur während der Herstellung des Elektrodenmaterials für die Anode 1.2.1.

## Patentansprüche

1. Verfahren zur Herstellung eines Elektrodenmaterials,
**gekennzeichnet durch** folgende Schritte:
a) Bereitstellen einer Anzahl von Grundstoffen sowie zusätzlich Silizium zur Herstellung der elektrisch leitfähigen Matrix,
b) Vermischen und Pressen der Grundstoffe zu einer Tablette,
c) Eintauchen der Tablette in ein Lösungsmittel,
d) Bestrahlen der Tablette mit elektromagnetischer Hochfrequenzstrahlung,
e) Pulverisieren der bestrahlten Tablette und anschließend Eintauchen des Pulvers in ein weiteres Lösungsmittel,
f) Erzeugung eines Gemischs aus dem in das weitere Lösungsmittel eingetauchte Pulver und Lithium oder Natrium als Aktivmaterial,
g) Erhitzen des Gemischs auf eine vorgegebene Temperatur und anschließendes Verrühren des erhitzten Gemischs
h) Abkühlen des verrührten, erhitzten Gemischs,
i) Bestrahlen des abgekühlten Gemischs mit elektromagnetischer Hochfrequenzstrahlung und,
j) Abkühlen und Pulverisieren des bestrahlten Gemischs.

2. Verfahren nach Anspruch 1,
**dadurch gekennzeichnet, dass** die elektromagnetische Hochfrequenzstrahlung im Wesentlichen kontinuierlich ausgesendet wird.

3. Verfahren nach Anspruch 1 oder 2,
**dadurch gekennzeichnet, dass** als Grundstoffe zumindest ein Kohlenhydrat, Kaliumhydrogencarbonat und Magnesiumstearat bereitgestellt werden.

4. Elektrodenmaterial für einen elektrochemischen Energiespeicher, wobei das Elektrodenmaterial mittels des Verfahrens nach einem der Ansprüche 1 bis 3 hergestellt und aus einem Verbundmaterial gebildet ist, wobei das Verbundmaterial zumindest eine elektrisch leitfähige Matrix und Lithium oder Natrium als Aktivmaterial umfasst, wobei
die elektrisch leitfähige Matrix zumindest eine poröse und mechanisch flexible Kohlenstoffstruktur umfasst,
wobei das Verbundmaterial als ein Beschichtungsmaterial für eine Anode (1.2.1) ausgebildet ist und
wobei die elektrisch leitfähige Matrix zusätzlich eine Siliziumstruktur umfasst.

5. Elektrodenmaterial nach Anspruch 4,
**dadurch gekennzeichnet, dass** ein Volumen der elektrisch leitfähigen Matrix in Abhängigkeit eines Oxidationsvorgangs und/oder Reduktionsvorgangs des Aktivmaterials veränderbar ist.

6. Elektrochemischer Energiespeicher, umfassend zumindest eine Elektrode mit einem Elektrodenmaterial nach Anspruch 4 oder 5.

## Claims

1. Method for producing an electrode material, **characterised by** the following steps:
a) providing a number of base substances and additionally silicon for producing the electrically conductive matrix,
b) mixing and pressing the base substances into a tablet,
c) immersing the tablet in a solvent,
d) irradiating the tablet with high-frequency electromagnetic radiation,
e) pulverising the irradiated tablet and subsequently immersing the powder in an additional solvent,
f) producing a mixture of the powder immersed in the additional solvent and lithium or sodium as the active material,
g) heating the mixture to a predefined temperature and subsequently stirring the heated mixture,
h) cooling the stirred, heated mixture,
i) irradiating the cooled mixture with high-frequency electromagnetic radiation, and
j) cooling and pulverising the irradiated mixture.

2. Method according to claim 1,
**characterised in that** the high-frequency electromagnetic radiation is emitted substantially continuously.

3. Method according to claim 1 or 2,
**characterised in that** at least one carbohydrate, potassium bicarbonate and magnesium stearate are provided as base substances.

4. Electrode material for an electrochemical energy accumulator, wherein the electrode material is produced by means of the method according to any of claims 1 to 3 and is formed from a composite material, wherein the composite material comprises at least one electrically conductive matrix and lithium or sodium as the active material, wherein the electrically conductive matrix comprises at least one porous and mechanically flexible carbon structure, wherein
the composite material is designed as a coating material
for an anode (1.2.1) and
wherein the electrically conductive matrix
additionally comprises a silicon structure.

5. Electrode material according to claim 4,
**characterised in that** a volume of the electrically conductive matrix can be changed depending on an oxidation process and/or reduction process of the active material.

6. Electrochemical energy accumulator, comprising at least one electrode having an electrode material according to claim 4 or 5.

## Revendications

1. Procédé de fabrication d'un matériau d'électrodes, **caractérisé par** les étapes suivantes consistant à :
a) utiliser une pluralité de corps purs simples et également du silicium pour fabriquer la matrice conductrice,
b) mélanger et presser les corps purs simples à une pastille,
c) plonger la pastille dans un solvant,
d) exposer la pastille à un rayonnement électromagnétique à haute fréquence,
e) réduire en poudre la pastille soumise au rayonnement et ensuite plonger la poudre dans un autre solvant,
f) produire un mélange à partir de la poudre plongée dans l'autre solvant, de lithium ou de sodium en tant que matériau actif,
g) chauffer le mélange à une température prédéfinie et ensuite mélanger en remuant le mélange chauffé,
h) faire refroidir le mélange chauffé et remué,
i) exposer le mélangé refroidi au rayonnement électromagnétique à haute fréquence et
j) faire refroidir et pulvériser le mélangé soumis au rayonnement.

2. Procédé selon la revendication 1, **caractérisé en ce que** le rayonnement électromagnétique à haute fréquence est émis sensiblement en continu.

3. Procédé selon la revendication 1 ou la revendication 2, **caractérisé en ce qu'**on utilise en tant que corps pur simple, au moins un hydrate de carbone, un hydrogénocarbonate de potassium et un stéarate de magnésium.

4. Matériau d'électrodes pour un accumulateur d'énergie électrochimique, le matériau d'électrodes étant fabriqué selon le procédé selon l'une des revendications 1 à 3, et étant formé à partir d'un matériau composite, le matériau composite comprenant au moins une matrice conductrice et du lithium ou du sodium en tant que matériau actif, la matrice conductrice comprenant au moins une structure de carbone mécanique souple,
le matériau composite servant de matériau de revêtement pour une anode (1.2.1) et la matrice conductrice comprenant en outre une structure en silicium.

5. Matériau d'électrodes selon la revendication 4, **caractérisé en ce qu'**un volume de la matrice conductrice peut se modifier en fonction d'un processus d'oxydation et/ou un processus de réduction du matériau actif.

6. Accumulateur d'énergie électrochimique, comprenant au moins une électrode dotée d'un matériau d'électrodes selon la revendication 4 ou la revendication 5.
